# EUROPÄISCHE PATENTSCHRIFT

(11) **EP 0 716 897 B1**
(45) Veröffentlichungstag und Bekanntmachung des Hinweises auf die Patenterteilung: **11.08.1999**
(21) Anmeldenummer: 94119920.0
(22) Anmeldetag: 16.12.1994
(51) Int. Cl.: B23D 49/16

(54) **Pendelhubantrieb für Stichsägen**
Reciprocating and oscillating drive for sabre saws
Dispositif de mouvement alternatif et oscillant pour scies santeuses

(43) Veröffentlichungstag der Anmeldung: 19.06.1996
(73) Patentinhaber: CEKA ELEKTROWERKZEUGE AG + Co.KG, CH-9630 Wattwil (CH)
(72) Erfinder: Dürr, Paul, CH-9631 Ulisbach (CH); Breitenmoser, Armin, CH-9631 Ulisbach (CH)
(74) Vertreter: Otte, Peter, Dipl.-Ing.

(56) Entgegenhaltungen:
- DE-A- 3 118 758
- DE-A- 3 702 670
- DE-U- 8 702 727
- US-A- 4 262 421
- US-A- 4 628 605

## Beschreibung

Die Erfindung betrifft einen Pendelhubantrieb für Stichsägen nach dem Oberbegriff des Patentanspruchs 1.

Um bei Stichsägen besonders optimale Sägeergebnisse zu erzielen, ist es seit langem bekannt, der vertikalen Auf- und Abbewegung des Sägeblatts simultan eine horizontale Vor- und Rückbewegung zu überlagern. Mit diesen sogenannten Pendelhubstichsägen lassen sich durch eine verbesserte Späneabfuhr wesentlich höhere Sägeleistungen, insbesondere bei großen Materialstärken, erzielen.

Zur Erzeugung der Pendelhubbewegung sind Pendelhubantriebe bekannt, welche eine große Anzahl von bewegten Teilen erfordern. So ist aus der DE 37 02 670 A1 ein Pendelhubantrieb bekannt, bei dem die Hubbewegung des das Sägeblatt aufnehmenden, in einem oberen und unteren Lager geführten Stößels durch eine Kreuzschubkurbel erzeugt wird. Das obere Lager des Stößels ist zusammen mit diesem drehbar im Sägengehäuse angeordnet, das untere Lager des Stößels ist sowohl in Richtung der Ebene des Sägeblatts querverschieblich als auch schwenkbar im Sägengehäuse geführt. Zur Auf- und Abbewegung wird eine Führungskulisse, die Bestandteil eines Hubelementes ist, betätigt. Das Hubelement ist dabei in einer Geradführung gleitend geführt. Das untere Ende des Hubelements wirkt auf einen Arm eines Winkelhebels ein, der um ein in Achsrichtung des Stößels manuell verstellbares Lager drehbar ist. Der andere Arm des Winkelhebels tangiert das untere Stößellager, welches gegen die Kraft einer Feder begrenzt quer zur Stößellängsachse verschiebbar ist. Auf diese Weise wird dem sich auf- und abbewegenden Stößel eine Querbewegung überlagert, so daß der Stößel eine periodische Pendelhubbewegung ausführt.

Nachteilig bei dieser Art des Pendelhubantriebs Wie bei dem mit US-A 4262421 bekannt gewordenen hächstkommenden Stand der Technik ist, daß sehr viele bewegte Teile erforderlich sind. So ist neben einem oberen Stößellager auch ein unteres Stößellager nötig, in welchem der Stößel gleitverschieblich geführt ist. Das untere Stößellager seinerseits ist in aufwendiger Weise sowohl in Richtung der Ebene des Sägeblatts querverschiebbar als auch schwenkbar im Sägengehäuse geführt. Schließlich muß auch das Hubelement zur Betätigung des Winkelhebels an einer Geradführung gleitend geführt sein. Die gesamte Anordnung ist aufgrund der vielen beweglichen Teile und insbesondere der vielen Lagerungen störanfällig, aufwendig herzustellen und zu montieren und somit auch kostspielig.

Aufgabe der Erfindung ist es, die genannten Nachteile zu beseitigen und einen Pendelhubantrieb für Stichsägen dahingehend weiterzubilden, daß mit möglichst wenig bewegten Teilen, Lagern u.dgl. eine optimale, d.h. eine störungssicher arbeitende, einfach zu erzeugende Pendelhubbewegung des Sägeblatts ermöglicht wird.

Die Aufgabe wird bei einem Pendelhubantrieb für Stichsägen mit den Merkmalen des Oberbegriffs des Patentanspruchs 1 erfindungsgemäß durch die Merkmale des kennzeichnenden Teils des Patentanspruchs 1 gelöst.

Es ist besonders vorteilhaft, daß die zum Massenausgleich des auf- und abbewegten Stößels vertikal auf- und abbewegbare Ausgleichsmasse gleichzeitig auch mittels der unter der Ausgleichsmasse gelagerten Pendelgabel die horizontale Pendelhubbewegung des Sägeblatts erzeugt. Auf diese Weise sind im wesentlichen nur zwei bewegte Teile zur Erzeugung des Pendelhubs erforderlich, von denen eines, die Ausgleichsmasse, gleichzeitig einem anderen Zweck, nämlich dem Massenausgleich des sich auf- und abbewegenden Stößels dient.

Weitere vorteilhafte Ausgestaltungen der Erfindung sind Gegenstand der Unteransprüche.

Beispielsweise ist es vorteilhaft, daß zur Veränderung des Pendelhubs des Sägeblattes in der Pendelgabel eine Ausnehmung vorgesehen ist, an der ein exzentrisch gelagerter Anschlag zur Begrenzung der Drehbewegung der Pendelgabel teilweise oder ganz zur Anlage kommt.

Der exzentrisch gelagerte Anschlag ist seinerseits mit einem an dem Gehäuse der Stichsäge angeordneten drehbaren Knopf verbunden, so daß ein Bediener der Stichsäge durch Verdrehen des Knopfes eine stufenweise oder kontinuierliche Einstellung des Pendelhubs realisieren kann.

Vorzugsweise ist die Ausgleichsmasse an einer starr am Stichsägengehäuse befestigten Trägerplatte gleitverschieblich geführt. Hierdurch erhöht sich nicht nur die Stabilität des gesamten Pendelhubantriebs, sondern es wird darüber hinaus eine sichere Lagerung der Ausgleichsmasse gewährleistet.

Zur Reibungsverminderung ist vorteilhafterweise an einem der Hebelarme der Pendelgabel eine Stützrolle befestigt, die an dem Sägeblatt zur Anlage kommt. Darüber hinaus sind zur Reibungsverminderung auch an dem unteren Ende der Ausgleichsmasse zwei gegenläufig drehbar gelagerte Nadelrollen angeordnet, deren eine an einer Gleitfläche der Pendelgabel und deren andere an einer vertikal starr im Stichsägengehäuse befestigten Führungsfläche abrollen.

Der Stößelträger ist vorzugsweise ein Kunststoffspritzteil, so daß er nur eine geringe bewegte Masse aufweist.

Vorteilhaft kann es neben der oben erwähnten Einstellmöglichkeit des Pendelhubs auch sein, daß zur Ausschaltung des Pendelhubs eine Gleitfläche der Pendelgabel eine Öffnung aufweist, durch welche die Ausgleichsmasse in der Ruhestellung der Pendelgabel ungehindert hindurch bewegbar ist und infolgedessen keine Drehbewegung der Pendelgabel erzeugt wird.

Die nachfolgende Beschreibung bevorzugter Ausführungsformen der Erfindung dient im Zusammenhang mit beiliegender Zeichnung, der näheren Erläuterung.

Es zeigen:
- Fig. 1: eine teilweise geschnittene Darstellung eines in einem Stichsägengehäuse gelagerten Pendelhubantriebs;
- Fig. 2: eine teilweise weggebrochene, geschnittene Darstellung eines Pendelhubantriebs mit einstellbarem Pendelhub mit einer arretierten Pendelgabel;
- Fig. 3: eine teilweise weggebrochene, geschnittene Draufsicht des in Fig. 2 dargestellten Pendelhubantriebs,
- Fig. 4: eine teilweise weggebrochene, geschnittene Darstellung des in Fig. 2 dargestellten Pendelhubantriebs mit einer frei drehbaren, einen maximalen Pendelhub ermöglichenden Pendelgabel und
- Fig. 5: eine teilweise weggebrochene, geschnittene Draufsicht auf den in Fig. 4 dargestellten Pendelhubantrieb.

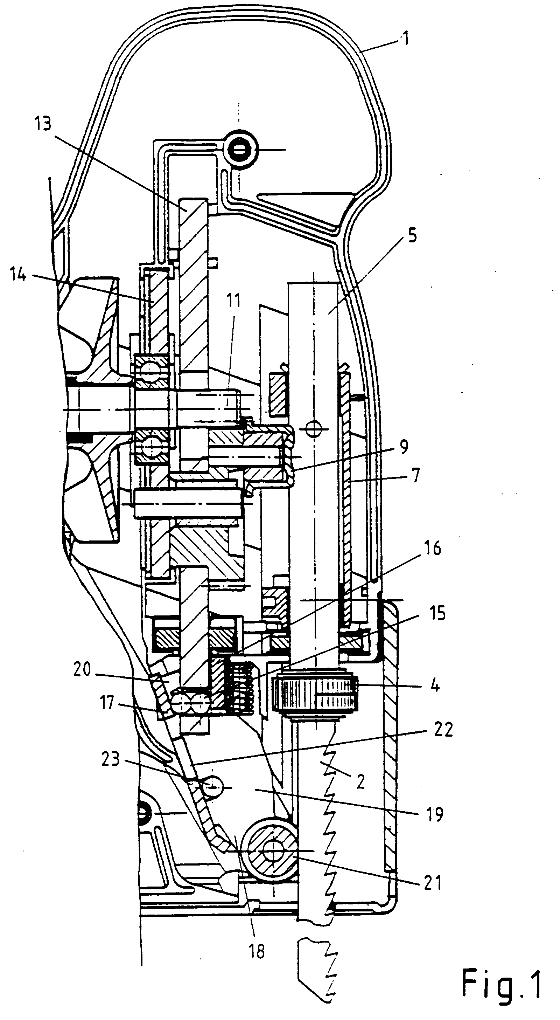

Wie aus Fig. 1 ersichtlich, umfaßt ein in dem vorderen Teil eines Stichsägengehäuses 1 angeordneter Pendelhubantrieb im wesentlichen einen Stößel 5, an dem mittels eines Schnellspannsystems 4 ein Stichsägenblatt 2 lösbar befestigt ist. Der Stößel 5 ist in einem Stößelträger 7 gleitverschieblich geführt.

Der Stößelträger 7, welcher vorzugsweise aus einem Kunststoffspritzgußteil besteht, so daß er selbst nur eine geringe bewegte Masse aufweist, ist drehbar in dem Stichsägengehäuse 1 gelagert.

Zur Erzeugung der Auf- und Abbewegung des Stößels 5 greift an dem Stößel 5 in an sich bekannter Weise eine von einer Welle 11 eines Antriebsmotors exzentrisch angetriebene Kulisse 9 an.

Als Massenausgleich für den sich auf- und abbewegenden Stößel 5 und das an ihm befestigte Sägeblatt 2 ist eine Ausgleichsmasse 13 vorgesehen. Die Ausgleichsmasse 13 weist vorzugsweise die Form einer dicken Scheibe auf, welche zur Gewährleistung einer sicheren Lagerung an einer im Stichsägengehäuse 1 befestigten Trägerplatte 14 gleitverschieblich geführt ist. In der Scheibe sind Ausnehmungen für den Stößelantrieb und zur Befestigung der Ausgleichsmasse 13 vorgesehen.

Die Ausgleichsmasse 13 dient nicht nur dem Massenausgleich des sich auf- und abbewegenden Stößels 5 und des an ihm befestigten Sägeblatts 2, sondern sie ist auch Teil einer Pendelhubeinrichtung zur Erzeugung eines Pendelhubs des Sägeblatts 2. Hierzu ist unterhalb der Ausgleichsmasse 13 eine drehbar gelagerte Pendelgabel 19 angeordnet, welche zwei im wesentlichen gleich lange Hebelarme 18, 20 umfaßt, deren erster Hebelarm 18 an dem Sägeblatt 2 anliegt, und an deren zweitem Hebelarm 20 eine zur Horizontalen geneigte Gleitfläche 17 ausgebildet ist, an welcher der untere Teil der Ausgleichsmasse 13 zur Anlage kommt.

Zur Verminderung der Reibung des an dem ersten Hebelarm 18 entlanggleitenden Sägeblatts 2 ist an dem Hebelarm 18 eine Stützrolle 21 befestigt, welche eine Abrollbewegung an dem sich auf- und abbewegenden Sägeblatt 2 ausführt, während durch den Hebelarm 18 ein in Horizontalrichtung wirkender Druck auf das Sägeblatt 2 ausgeübt wird. Des weiteren sind zur Reibungsverminderung an dem unteren Ende der Ausgleichsmasse 13 zwei gegenläufig drehbar gelagerte Nadelrollen 15 angeordnet, deren eine an der Gleitfläche 17 und deren andere an einer vertikal, beispielsweise am Stichsägengehäuse 1, befestigten Führungsfläche 16 abrollt.

Die Erzeugung des Pendelhubs geht nun folgendermaßen vonstatten: Zusammen mit dem durch die exzentrisch angetriebene Kulisse 9 vertikal auf- und abbewegten Stößel 5 und des an ihm befestigten Sägeblatts 2 bewegt sich die Ausgleichsmasse 13 ebenfalls auf und ab. Hierbei übt die Ausgleichsmasse 13 über die Nadelrollen 15 auf die zur Horizontalen geneigte, an der Pendelgabel 19 ausgebildete Gleitfläche 17 einen vertikal nach unten gerichteten Druck auf den zweiten Hebelarm 20 der Pendelgabel 19 aus. Dieser vertikal nach unten gerichtete Druck wird vermittels der Pendelgabel 19 in einen horizontal nach seitwärts gerichteten Druck umgesetzt und durch den ersten Hebelarm 18 und die an ihm befestigte Stützrolle 21 auf das Sägeblatt 2 übertragen. Hierdurch wird dem sich auf- und abbewegenden Sägeblatt 2 eine Querbewegung überlagert, so daß es eine periodische Pendelhubbewegung ausführt.

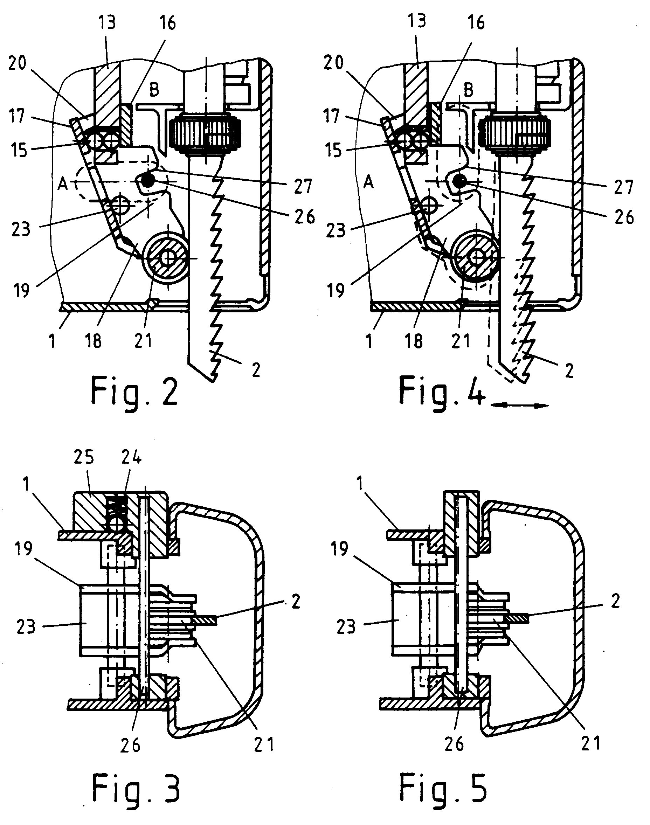

Wie aus den Fig. 2 bis 5 ersichtlich, kann die Pendelgabel 19 auch so ausgebildet sein, daß der Pendelhub stufenweise oder kontinuierlich einstellbar ist.

In Fig. 2 ist schematisch, teilweise weggebrochen und geschnitten, die Darstellung eines Pendelhubantriebs mit einstellbarem Pendelhub dargestellt, bei dem die Pendelgäbel 19 arretiert ist, so daß kein Pendelhubbetrieb der Stichsäge möglich ist. Wie in Fig. 2 dargestellt, ist hierzu an dem Gehäuse 1 ein beispielsweise mit Rastmitteln 24 versehener drehbarer Knopf 25 angeordnet, der mit einem exzentrisch gelagerten Anschlag 26 verbunden ist. In der Pendelgabel 19 ist eine Ausnehmung 27 vorgesehen, innerhalb welcher der exzentrische Anschlag 26 angeordnet ist. In einer mit A (Fig. 2, Fig. 4) gekennzeichneten Stellung des Knopfes 25 kommt nun der exzentrische Anschlag 26 an einer Fläche der Ausnehmung 27 der Pendelgabel 19 zur Anlage, so daß die Pendelgabel einerseits durch die Lagerung an ihrem Drehpunkt 23, andererseits durch den exzentrischen, an der Ausnehmung 27 zur Anlage kommenden Anschlag 26 in dieser, in Fig. 2 gezeigten Stellung fixiert ist. Wenn sich in diesem Fall die Ausgleichsmasse 13 aus ihrer in Fig. 2 dargestellten tiefstmöglichen Position auf die oben beschriebene Weise aufwärts bewegt, so berühren die beiden Nadelrollen 15 bei der Aufwärtsbewegung der Ausgleichsmasse 13 die Fläche 17 nicht mehr, da die Pendelgabel 19 und mithin die Fläche 17 durch ihre arretierte Stellung der sich aufwärts bewegenden Ausgleichsmasse 13 nicht mehr durch eine Drehbewegung zu folgen vermögen und infolgedessen auch kein Pendelhub erzeugt werden kann.

In Fig. 4 und 5 ist demgegenüber eine weitere Stellung B des Knopfes 25 und der Pendelgabel 19 dargestellt, bei dem der exzentrische Anschlag 26 derart in der Ausnehmung 27 der Pendelgabel 19 angeordnet ist, daß er keine der ihn umgebenden Flächen der Ausnehmung 27 berührt. In diesem Falle ist die Pendelgabel 19 frei um ihren Drehpunkt 23 drehbar. Bei einer Auf- und Abwärtsbewegung der Ausgleichsmasse 13 kann die Pendelgabel 19 daher durch eine entsprechende Drehbewegung der Ausgleichsmasse 13 folgen, und es liegt infolgedessen die Fläche 17 immer an einer der Nadelrollen 15 an. In diesem Falle findet bei der in Fig. 4 dargestellten Ausführungsform bei einer Aufwärtsbewegung der Ausgleichsmasse 13 eine Drehung der Pendelgabel 19 im Uhrzeigersinn und bei einer Abwärtsbewegung der Ausgleichsmasse 13 eine Drehung der Pendelgabel 19 im Gegenuhrzeigersinn statt, und es ergibt sich infolge davon auf die oben beschriebene Weise eine Pendelhubbewegung des Sägeblattes 2. Dies ist in Fig. 4 schematisch durch einen Doppelpfeil unterhalb des Sägeblattes 2 und zwei Sägeblattstellungen (eine davon in unterbrochener Linie dargestellt) veranschaulicht.

Es versteht sich, daß zwischen diesen beiden extremen Positionen der Stellung A des Knopfes 25 und der Stellung B des Knopfes 25 weitere, die Pendelhubbewegung teilweise einschränkende Stellungen der Pendelgabel 19 möglich sind. Hierbei kann der Knopf 25 und mit ihm der exzentrische Anschlag 26 entweder in verschiedenen einrastbaren Stellungen durch ein Rastmittel 24 (Fig. 3) fixiert werden, oder es ist eine kontinuierliche Verstellung des Knopfes 25 und des exzentrischen Anschlags 26 möglich. Auf diese Weise lassen sich entweder verschiedene einzelne Pendelhublängen einstellen, oder es kann die Pendelhublänge kontinuierlich verändert werden.

Darüber hinaus kann neben der oben dargestellten Ausführungsform zur Ausschaltung der Pendelhubbewegung auch in der Gleitfläche 17 der Pendelgabel 19 eine Öffnung 22 vorgesehen sein, durch welche die Ausgleichsmasse 13 zusammen mit den an ihr befestigten Nadelrollen 15 in Ruheposition der Pendelgabel 19 ungehindert hindurchbewegt werden kann. Hierzu wird die Pendelgabel 19 bei der in Fig. 1 gezeigten Ausführungsform entgegen dem Uhrzeigersinn gedreht, so daß die Ausgleichsmasse 13 die Gleitfläche 17 nicht mehr tangiert, sondern stattdessen durch die Öffnung 22 hindurchbewegbar ist.

Die dargestellte Pendelhubeinrichtung hat gegenüber den bisher bekannten Pendelhubantrieben den Vorteil, daß sie im wesentlichen lediglich zwei bewegte Teile umfaßt, nämlich die Ausgleichsmasse 13 und die Pendelgabel 19. Hierbei kommt der Ausgleichsmasse 13 neben einer Erzeugung des Pendelhubs auch die Funktion eines Massenausgleichs des sich auf- und abbewegenden Stößels 5 und des an ihm befestigten Sägeblatts 2 zu. Der Pendelhubantrieb ist somit erstens einfach und kostengünstig herzustellen, und zweitens ist aufgrund der geringen Anzahl bewegter Teile auch ein störsicherer Betrieb gewährleistet.

## Patentansprüche

1. Pendelhubantrieb für Stichsägen mit einem Stößel (5), mit einem an dem Stößel (5) lösbar befestigten Sägeblatt (2), mit einem, eine Stößelführung bildenden, drehbar gelagerten Stößelträger (7), mit einer, zur Erzeugung der Auf- und Abbewegung des Stößels (5) exzentrisch von einer Antriebswelle (11) eines Motors angetriebenen Kulisse (9) und mit einer Pendelhubeinrichtung, und mit einer mit dem Stößel (5) vertikal auf- und abbewegbare Ausgleichsmasse (13) dadurch gekennzeichnet, daß die Pendelhubeinrichtung umfaßt:
- eine drehbar unterhalb der Ausgleichsmasse (13) gelagerte Pendelgabel (19), deren erster Hebelarm (18) an dem Sägeblatt (2) anliegt, und an deren zweitem Hebelarm (20) eine zur Horizontalen geneigte Gleitfläche (17) ausgebildet ist, an welcher die Ausgleichsmasse (13) zur Erzeugung einer horizontalen Pendelhubbewegung des Sägeblatts (2) unter Ausübung eines vertikal nach unten gerichteten Drucks entlanggleitet.

2. Pendelhubantrieb nach Anspruch 1, dadurch gekennzeichnet, daß die Drehachse (23) der Pendelgabel (19) derart angeordnet ist, daß die Hebelarme (18, 20) im wesentlichen die gleiche Länge aufweisen.

3. Pendelhubantrieb nach Anspruch 1 oder 2, dadurch gekennzeichnet, daß zur Veränderung des Pendelhubs in der Pendelgabel (19) eine Ausnehmung (27) vorgesehen ist, an der ein exzentrisch gelagerter Anschlag (26) zur Begrenzung der Drehbewegung der Pendelgabel (19) teilweise oder ganz zur Anlage kommt.

4. Pendelhubantrieb nach Anspruch 3, dadurch gekennzeichnet, daß der exzentrisch gelagerte Anschlag (26) mit einem am Gehäuse (1) der Stichsäge angeordneten drehbaren Knopf (25) zur Einstellung des Pendelhubs verbunden ist.

5. Pendelhubantrieb nach Anspruch 1 oder 2, dadurch gekennzeichnet, daß die Gleitfläche (17) zur Ausschaltung des Pendelhubs eine Öffnung (22) aufweist, durch welche die Ausgleichsmasse (13) in der Ruhestellung der Pendelgabel (19) ungehindert hindurchbewegbar ist.

6. Pendelhubantrieb nach einem der vorstehenden Ansprüche, dadurch gekennzeichnet, daß die Ausgleichsmasse (13) an einer starr am Stichsägengehäuse (1) befestigten Trägerplatte (14) gleitverschieblich geführt ist.

7. Pendelhubantrieb nach einem der vorstehenden Ansprüche, dadurch gekennzeichnet, daß an dem ersten Hebelarm (18) eine Stützrolle (21) befestigt ist, die zur Reibungsverminderung an dem Sägeblatt (2) zur Anlage kommt.

8. Pendelhubantrieb nach einem der vorstehenden Ansprüche, dadurch gekennzeichnet, daß zur Reibungsverminderung an dem unteren Ende der Ausgleichsmasse (13) zwei gegenläufig drehbar gelagerte Nadelrollen (15) angeordnet sind, deren eine an der Gleitfläche (17) und deren andere an einer vertikal starr im Stichsägengehäuse (1) befestigten Führungsfläche (16) abrollen.

9. Pendelhubantrieb nach Anspruch 1, dadurch gekennzeichnet, daß der Stößelträger (7) aus einem Kunststoffteil besteht.

## Claims

1. A pendulum and lifting drive for jigsaws, having a ram (5), having a saw blade (2) detachably secured to the ram (5), having a rotatably mounted ram bearer (7) which forms a ram guide, having a crank (9) which is driven eccentrically by a driving shaft (11) of a motor in order to produce the upward and downward motion of the ram (5), and having a pendulum and lifting arrangement, and having a balance mass (13) movable vertically upward and downward with the ram(5), characterised in that the pendulum and lifting arrangement comprises:
- a pendulum fork (19) which is rotatably mounted below the balance mass (13) and whose first lever arm (18) contacts the saw blade (2) and on whose second lever arm (20) there is formed a slide face (17) which is at an incline to the horizontal and along which the balance mass (13) slides to produce a horizontal pendulum and lifting motion of the saw blade (2) while exerting a vertically downwards-directed pressure.

2. A pendulum and lifting drive in accordance with Claim 1, characterised in that the rotational axis (23) of the pendulum fork (19) is arranged in such a manner that the lever arms (18, 20) are substantially the same length.

3. A pendulum and lifting drive in accordance with Claim 1 or 2, characterised in that a cut-out (27) is provided in the pendulum fork (19) in order to alter the pendulum lift, and an eccentrically mounted stop (26) partially or totally rests thereon to limit the rotary motion of the pendulum fork (19).

4. A pendulum and lifting drive in accordance with Claim 3, characterised in that the eccentrically mounted stop (26) is connected to a rotatable knob (25), for adjusting the pendulum lift, arranged on the housing (1) of the jigsaw.

5. A pendulum and lifting drive in accordance with Claim 1 or 2, characterised in that the slide face (17) has an opening (22) to eliminate the pendulum lift, through which opening (22) the balance mass (13) can be moved unrestricted in the at rest position of the pendulum fork (19).

6. A pendulum and lifting drive in accordance with any one of the preceding Claims, characterised in that the balance mass (13) is guided in a slideable manner on a carrier plate (14) rigidly secured to the jigsaw housing (1) .

7. A pendulum and lifting drive in accordance with any one of the preceding Claims, characterised in that a supporting roller (21) is secured to the first lever arm (18) and rests on the saw blade (2) to reduce friction.

8. A pendulum and lifting device in accordance with any one of the preceding Claims, characterised in that two needle rollers (15) mounted so as to be rotatable in opposite directions are arranged at the lower end of the balance mass in order to reduce friction, one thereof rolling on the slide face (17) and the other thereof rolling on a guide face (16) secured vertically and rigidly in the jigsaw housing (1).

9. A pendulum and lifting drive in accordance with Claim 1, characterised in that the ram bearer (7) consists of a plastics part.

## Revendications

1. Dispositif de mouvement alternatif et oscillant pour des scies sauteuses, comprenant un poussoir (5) auquel est fixé de manière amovible une lame de scie (2),
- un support de poussoir (7) monté à rotation et formant avec celui-ci un guide de poussoir,
- une coulisse (9) entraînée par un moteur pour générer le mouvement de montée et de descente du poussoir (5), cette coulisse étant excentrée par rapport à l'arbre d'entraînement (11), ainsi qu'une installation de mouvement alternatif oscillant ainsi qu'une masse d'équilibrage (13) effectuant un mouvement de montée et de descente verticalement avec le poussoir (5),
caractérisé en ce que
l'installation de mouvement alternatif et oscillant comprend
- une fourchette pendulaire (19) montée à rotation sous la masse d'équilibrage (13), dont le premier bras de levier (18) s'applique contre la lame de scie (2) et le second bras de levier (20) est formé par une surface de glissement (17) inclinée horizontalement par rapport au second bras de levier (20), contre laquelle glisse la masse d'équilibrage' (13) pour générer un mouvement alternatif pendulaire horizontal de la lame de scie (2) en exerçant une pression dirigée verticalement vers le bas.

2. Dispositif d'entraînement de mouvement alternatif et oscillant selon la revendication 1,
caractérisé en ce que
l'axe de rotation (23) de la fourche pendulaire (19) est monté pour que les bras de levier (18, 20) présentent essentiellement la même longueur.

3. Dispositif d'entraînement de mouvement alternatif et oscillant selon l'une des revendications 1 ou 2,
caractérisé par
une cavité (27) prévue dans la fourche pendulaire (19) pour modifier le mouvement alternatif oscillant, cavité contre laquelle une butée (26), montée de manière excentrée, vient partiellement ou totalement en appui pour limiter le mouvement de rotation de la fourche (19).

4. Dispositif d'entraînement de mouvement alternatif et oscillant selon la revendication 3,
caractérisé en ce que
la butée (26), montée de manière excentrée, est reliée à un bouton tournant (25) prévu sur le corps (1) de la scie sauteuse pour régler le mouvement alternatif et oscillant.

5. Dispositif d'entraînement de mouvement alternatif et oscillant selon la revendication 1 ou 2,
caractérisé en ce que
la surface de glissement (17) comporte une ouverture (22) pour couper le mouvement alternatif pendulaire, ouverture par laquelle la masse d'équilibrage (13) peut passer sans difficulté en position de repos pour la fourche pendulaire (19).

6. Dispositif d'entraînement de mouvement alternatif et oscillant selon l'une des revendications précédentes,
caractérisé en ce que
la masse d'équilibrage (13) est guidée de manière à coulisser sur une plaque de support (14) fixée rigidement au corps (1) de la scie sauteuse.

7. Dispositif d'entraînement de mouvement alternatif et oscillant selon l'une des revendications précédentes,
caractérisé par
un galet d'appui (21) fixé au premier bras de levier (18), ce galet venant en appui contre la lame de scie (2) pour réduire le frottement.

8. Dispositif d'entraînement de mouvement alternatif et oscillant selon l'une des revendications précédentes,
caractérisé par
deux galets (15) montés à aiguille, à rotation opposée, à l'extrémité inférieure de la masse d'équilibrage (13) pour réduire le frottement, galets dont l'un peut rouler sur la surface de glissement (17) et l'autre sur une surface de guidage (16) fixée verticalement de manière rigide au corps (1) de la scie.

9. Dispositif d'entraînement de mouvement alternatif et oscillant selon la revendication 1,
caractérisé en ce que
le support de poussoir (7) est une pièce en matière plastique.
